**Europäisches Patentamt**

**European Patent Office**

**Office européen des brevets**

(19)

(11) Veröffentlichungsnummer : **0 222 061 B2**

(12) # NEUE EUROPÄISCHE PATENTSCHRIFT

(45) Veröffentlichungstag der neuen Patentschrift :
**24.06.92 Patentblatt 92/26**

(51) Int. Cl.⁵ : **C08J 3/12,** C08L 91/06, B29B 9/00

(21) Anmeldenummer : **86109877.0**

(22) Anmeldetag : **18.07.86**

(54) **Verfahren zur Herstellung mikronisierter Wachse.**

(30) Priorität : **19.09.85 DE 3533436**

(43) Veröffentlichungstag der Anmeldung :
**20.05.87 Patentblatt 87/21**

(45) Bekanntmachung des Hinweises auf die
Patenterteilung :
**13.09.89 Patentblatt 89/37**

(45) Bekanntmachung des Hinweises auf die
Entscheidung über den Einspruch :
**24.06.92 Patentblatt 92/26**

(84) Benannte Vertragsstaaten :
**BE DE FR GB IT NL**

(56) Entgegenhaltungen :
**EP-A- 0 028 713**

(56) Entgegenhaltungen :
**DE-A- 2 601 602**
**US-A- 4 002 706**
**FETTE, SEIFEN, ANSTRICHMITTEL, Band 87,
Nr. 5, 1985, Seiten 214-216; R. KÖHLER et al.:
"Zerkleinerung von Wachsen aufLuftstrahlmühlen sowie Verwendung mikronisierter
Wachse in Anstrichmitteln"
HOECHST Wachse "Ceridust", "Hostalub",
Übersichts- und Datenblatt, November 1983,
S. 8,9,12**

(73) Patentinhaber : **HÜLS
AKTIENGESELLSCHAFT
Patentabteilung / PB 15 - Postfach 13 20
W-4370 Marl 1 (DE)**

(72) Erfinder : **Kühnle, Adolf, Dr.
Hoechster Strasse 6
W-4370 Marl (DE)**

EP 0 222 061 B2

## Beschreibung

Es ist bekannt, Wachse beispielsweise in Druckfarben- und Lacksystemen in Mengen zwischen 0,5 und 5 Gew.-% anzuwenden, um in Druckfarben und Lacken bestimmte Eigenschaften zu erzielen oder zu verbessern. Gegenüber nichtmikronisierten Produkten bieten mikronisierte Wachse den Vorteil, daß man sie entweder direkt oder in Form einer auf kaltem Weg hergestellten Dispersion zusetzen kann.

Für die Herstellung mikronisierter Wachse gibt es grundsätzlich zwei Verfahren.

Das erste Verfahren ist ein Sprühprozeß, bei dem man eine heiße, niedrigviskose Wachsschmelze durch eine Düse preßt und in sehr feine Wachströpfchen zerstäubt. Bei der anschließenden Abkühlung erstarren diese Wachströpfchen zu kugelförmigen Partikeln. Falls diese Partikel noch keine für die jeweilige Anwendung ausreichende Teilchenfeinheit besitzen, schließt sich ein Sichtungsprozeß an, der die noch enthaltenen Grobpartikel entfernt.

Das zweite Verfahren ist ein reiner Mahlprozeß. Hierbei werden in Pastillen-, Prill- oder Schuppenform vorliegende Wachse, aber auch grobe Wachspulver mittels spezieller Mahlaggregate, z. B. Strahlmühlen, mikronisiert. Manche dieser Mühlen sind so konstruiert, daß nur Mahlgut mit der gewünschten Teilchengröße die Mahlkammer verläßt. Diese besitzen quasi einen in der Mahlkammer integrierten Sichter.

Weiterhin sind hintereinander angeordnete Mahlaggregate bekannt, welche die Wachse in verschiedenen Stufen auf die gewünschte Korngröße bringen. Schließlich kommen auch Mahlaggregat-Sichter-Kombinationen zum Einsatz, worin das nach dem ersten Mahldurchgang herausgesichtete Grobgut sofort wieder in die Mahlkammer zurückgeführt wird und im zweiten Mahldurchgang auf die gewünschte Teilchenfeinheit gebracht wird.

Bei dem zuerst genannten Sprühprozeß erhält man zum überwiegenden Teil kugelförmige, regelmäßige Partikel mit kleiner Oberfläche, während man bei den Mahlprozessen zu gebrochenen, unregelmäßigen Partikeln mit großer Oberfläche kommt.

Kugelförmige Partikel verbessern die Gleiteigenschaften ("Slip") sowie die Abriebfestigkeit und Kratzfestigkeit von Druckfarben- und Lackfilmen. Sie liefern hier weitaus bessere Ergebnisse als gebrochene Partikel gleicher Wachskörperzusammensetzung. Ein weiterer Vorteil der kugelförmigen Partikel ist, daß sie durch ihre kugelförmige und glatte Oberfläche Druckfarben- und Lackfilmen ebenfalls glatte Oberflächen verleihen, so daß auffallendes Licht so reflektiert wird, daß durch den Wachszusatz fast kein Glanzverlust auftritt. Demgegenüber führen gemahlene Produkte, d. h. gebrochene Partikel, zu Störungen in der Oberfläche von Druckfarben- und Lackfilmen. Auffallendes Licht wird diffus zurückgestrahlt, woraus ein im Vergleich zu kugelförmigen Partikeln hoher Glanzverlust, d. h. ein Mattierungseffekt resultiert.

Nachteilig bei den kugelförmigen Partikeln sind die gegenüber gebrochenen Partikeln schlechteren Netz- bzw. Dispergiereigenschaften, denn sie sind aufgrund ihrer kleineren Oberfläche schwieriger zu benetzen als diese. Infolge ihrer Kugelform werden sie weiterhin beim Einrühren in Druckfarben- und Lacksysteme weniger geschert als gebrochene Partikel, so daß sie nur sehr schwierig verteilt werden können.

Durch Sprühen hergestellte mikronisierte Wachse neigen daher in Druckfarben- und Lacksystemen weitaus mehr zu Agglomeratbildung als durch Mahlen hergestellte Produkte gleicher Wachskörperzusammensetzung und gleicher Korngröße. Der Zusatz von den durch Sprühen hergestellten Wachspulvern kann deshalb häufig nur in vordispergierter Form erfolgen, während man die durch Mahlen hergestellten mikronisierten Wachse meist direkt in Druckfarben- und Lacksysteme einrühren kann.

Die Aufgabe bestand also darin, ein Produkt zu entwickeln, welches einerseits Druckfarben- und Lackfilmen die Gleiteigenschaften und Glanzwerte der durch Sprühen hergestellten mikronisierten Wachse verleiht, welches aber andererseits die günstigen Dispergiereigenschaften der durch Mahlen hergestellten Produkte besitzt.

Überraschend wurde gefunden, daß ein anspruchsgemäß hergestelltes mikronisiertes Wachs diese Eigenschaften besitzt.

Geeignete Wachse sind Naturwachse, Mineralwachse, Montanwachsderivate, Fettsäurederivate, Amidwachse, Fischer-Tropsch-Wachse und Polyolefinwachse sowie Mischungen aus solchen Wachsen. Die Tropfpunkte (bestimmt nach DGF M-III-3) dieser Wachse bzw. Wachsmischungen liegen zwischen 65 °C und 160 °C. Die Penetrationszahlen (bestimmt nach DGF M-III-9b) sind kleiner 10 mm.$10^{-1}$. Die Schmelzviskositäten (gemessen bei 150 °C) betragen weniger als 500 mPa s.

Mikronisiert bedeutet, daß die Teilchengröße sich im μm-Bereich bewegt.

Das Versprühen der Wachsschmelze zu einem feinen, aus weitgehend kugelförmigen Partikeln bestehenden Pulver kann in einer Düse mit Luft oder Inertgas, vorzugsweise Stickstoff, in bekannter Weise erfolgen ("Verdüsen"). Man geht von Temperaturen aus, welche 10 bis 200 °C, bevorzugt 50 bis 150 °C, über dem Tropfpunkt des Wachses bzw. der Wachsmischung liegen. Die in feine Tröpfchen zerstaubte Wachsschmelze kann durch Einblasen von Luft oder Inertgas, vorzugsweise Stickstoff, abgekühlt werden, so daß entweder direkt oder nach anschließender Sichtung mit einem handelsüblichen Sichter ein feines Pulver mit 50 bis 100 Gew.-%, bevorzugt 80 bis 100 Gew.-%, insbesondere 90 bis 100 Gew.-%, kleiner 48 μm und 60 bis 100 Gew.-%, bevorzugt 90 bis 100 Gew.-%, insbesondere 99 bis 100 Gew.-%, kleiner 96 μm erhalten wird.

Erfindungsgemäß vermahlt man dieses Pulver noch. Zum Mahlen dienen die für das Mikronisieren von Wachsen handelsüblichen Mahlaggregate, vorzugsweise Strahlmühlen, die mit Luft, Dampf oder anderen Gasen betrieben werden können.

Durch den Mahlvorgang zerkleinert man das Pulver zweckmäßig derart weiter, daß - gemessen mit dem Cilas Laser Granulometer 715 - 95 bis 100 Gew.-% kleiner 32 μm sind. Bevorzugt besitzt das Gut nach dem Vermahlen verglichen mit dem gesprühten Ausgangsmaterial 80 bis 100 Gew.-% kleiner 24 μm gegenüber 50 bis 100 Gew.-% kleiner 48 μm. Insbesondere betragen diese Werte nach dem Vermahlen (gemessen mit dem Cilas Laser Granulometer 715)

99,0 bis 100 Gew.-% kleiner 32 μm

85,0 bis 100 Gew.-% kleiner 24 μm

60,0 bis 100 Gew.-% kleiner 16 μm

40,0 bis 99 Gew.-% kleiner 12 μm

Die erfindungsgemäß hergestellten mikronisierten Wachse zeigen überraschend nicht nur eine leichte Dispergierbarkeit, sondern gleichzeitig auch unbeeinträchtigte Oberflächeneigenschaften wie Gleitwirkung, Glanz und Abriebfestigkeit.

In den nachfolgenden Beispielen wurden die Korngrößen der geprüften Wachspulver mit einem Meßgerät der Firma Cilas (Cilas Laser Granulometer 715) ermittelt.

Die Abriebfestigkeit und Gleitwirkung sowie der Glanz wurden in einer Toluoltiefdruckfarbe folgender Zusammensetzung geprüft bzw. beurteilt:

70 Teile Harzlösung (bestehend aus 51 Teilen Shebyharz in 49 Teilen Toluol)

8 Teile Pigment

X Teile Wachs

21 Teile Toluol

X = 1: Prüfung der Scheuerfestigkeit

X = 5: visuelle Beurteilung des Glanzes und der Farbtiefe

Die Scheuerfestigkeit wurde mit einem Gerät der Firma Prüfbau (Prüfbau Quartant-Scheuerprüfer) bestimmt.

Die Benetzbarkeit und die Dispergiereigenschaften wurden in einem handelsüblichen Nitrocellulosehochglanzlack geprüft. Hierzu wurden in einer 100 ml Glasflasche 50 g Nitrocelluloselack und 0,5 g mikronisiertes Wachs zwei Minuten geschüttelt. Anschließend wurde die Agglomeratbildung sowie ein 100 μm-Auftrag des Lackes auf schwarzen Prüfkarten beurteilt.

Beispiel 1

a) Man versprüht bzw. verdüst und sichtet ein Polyethylenhartparaffin mit einer osmometrischen Molmasse von 1 600, einer Dichte von 0,95 g/cm$^3$ und einem Tropfpunkt von 122 °C bei 220 °C zu einem Pulver folgender Korngröße:

kleiner 32 μm: 100 Gew.-%

kleiner 24 μm: 96,3 Gew.-%

kleiner 16 μm: 80,6 Gew.-%

kleiner 12 μm: 63,0 Gew.-%

kleiner 8 μm: 39,9 Gew.-%

b) Man versprüht bzw. verdüst und sichtet das unter a) beschriebene Polyethylenhartparaffin bei 200 °C mit einer Düse zunächst zu einem Pulver folgender Korngröße:

kleiner 96 μm: 100 Gew.-%

kleiner 48 μm: 93,9 Gew.-%

kleiner 32 μm: 74,2 Gew.-%

kleiner 24 μm: 51,1 Gew.-%

Danach vermahlt man dieses Pulver mit einer Strahlmühle auf folgende Korngröße:

kleiner 32 μm: 100 Gew.-%

kleiner 24 μm: 99,0 Gew.-%

kleiner 16 μm: 84,2 Gew.-%

kleiner 12 μm: 61,7 Gew.-%

kleiner 8 μm: 36,4 Gew.-%

c) Man vermahlt das unter a) beschriebene Polyethylenhartparaffin, ausgehend von Wachspastillen, mit einer Strahlmühle zu einem Pulver folgender Korngröße:

kleiner 32 μm: 100 Gew.-%

kleiner 24 μm: 98,5 Gew.-%

kleiner 16 μm: 91,1 Gew.-%

kleiner 12 μm: 67,7 Gew.-%

kleiner 8 μm: 37,6 Gew.-%

### Prüfung von a), b) und c) in einer Toluoltiefdruckfarbe:

| Probe Eigenschaften | 1a | 1b | 1c |
|---|---|---|---|
| Scheuerfestigkeit | grösser 2000 Hübe | grösser 2000 Hübe | 600 Hübe |
| Glanzeindruck und Farbtiefe (visuell) | Standard | wie 1a) | schlechter als 1) und 1b) |

### Prüfung nach a), b), c) in einem Nitrocelluloselack:

| Probe Eigenschaften | 1a | 1b | 1c |
|---|---|---|---|
| Dispergiergrad | 5 | 2 | 2 |
| 100 μm-Auftrag auf schwarzen Prüfkarten | 5 | 2 | 1 |

1 = sehr gut

2 = gut

3 = mittelmäßig

4 = nicht ganz ausreichend

5 = schlecht

### Beispiel 2

a) Man versprüht bzw. verdüst und sichtet ein synthetisches Hartparaffin mit einer osmometrischen Molmasse von 650, einer Dichte von 0,94 g/cm³ und einem Tropfpunkt von 111 °C bei 180 °C zu einem Pulver folgender Korngröße:

kleiner 24 μm: 99,9 Gew.-%

kleiner 16 μm: 99,9 Gew.-%

kleiner 12 μm: 93,2 Gew.-%

kleiner 8 μm: 69,3 Gew.-%

kleiner 6 μm: 49,1 Gew.-%

b) Man versprüht bzw. verdüst und sichtet das unter a) beschriebene synthetische Hartparaffin bei 170 °C zunachst zu einem Pulver folgender Korngröße:

kleiner 96 μm: 100 Gew.-%

kleiner 64 μm: 99,3 Gew.-%

kleiner 48 μm: 99,3 Gew.-%

kleiner 32 μm: 98,1 Gew.-%

kleiner 24 μm: 96,9 Gew.-%

kleiner 16 μm: 69,4 Gew.-%

kleiner 12 μm: 44.4 Gew.-%

Danach vermahlt man dieses Pulver mit einer Strahlmühle auf folgende Korngröße:

kleiner 24 μm: 100 Gew.-%

kleiner 16 μm: 99,2 Gew.-%

kleiner 12 μm: 95,5 Gew.-%

kleiner 8 μm: 64,0 Gew.-%

kleiner 6 μm: 43,7 Gew.-%

c) Man vermahlt das unter a) beschriebene synthetische Hartparaffin mit einer Strahlmühle ausgehend von Wachsschuppen zu eine Pulver folgender Korngröße:

kleiner 24 μm: 99,9 Gew.-%

kleiner 16 μm: 96,7 Gew.-%

kleiner 12 μm: 89,8 Gew.-%

4

kleiner 8 μm: 61,3 Gew.-%
kleiner 6 μm: 38,1 Gew.-%

Prüfung von a), b) und c) in einer Toluoltiefdruckfarbe:

| Probe<br>Eigenschaften | 2a | 2b | 2c |
|---|---|---|---|
| Scheuerfestigkeit | 400 Hübe | 500 Hübe | 200 Hübe |
| Glanzeindruck und Farbtiefe (visuell) | Standard | wie 2) | schlechter als 2a) und 2b) |

Prüfung von a), b) und c) in einem Nitrocelluloselack:

| Probe<br>Eigenschaften | 2a | 2b | 2c |
|---|---|---|---|
| Dispergiergrad | 5 | 2 | 2 |
| 100 μm-Auftrag auf schwarzen Prüfkarten | 5 | 2 | 2 |

**Patentansprüche**

1. Verfahren zur Herstellung mikronisierter Wachse, dadurch gekennzeichnet, daß man eine Wachsschmelze zu einem feinen Pulver mit weitgehend kugelförmigen Partikeln versprüht und dieses Pulver anschließend einer Mahlung unterwirft, wobei das zur Vermahlung kommende Pulver eine Korngröße von mindestens 60 Gew.-% kleiner als 96 μm und von mindestens 50 Gew.-% unterhalb 48 μm besitzt.

2. Verwendung der mikronisierten Wachse gemäß Patentanspruch 1 in Druckfarben und Lacken.

**Claims**

1. A process for the preparation of a micronized wax, characterized in that a wax melt is atomized to form a fine powder with substantially spherical particles, and this powder is subsequently ground, at least 60% by weight of the powder entering the grinding step having a grain size of less than 96μm and at least 50% by weight having a grain size of less than 48μm.

2. The use of a micronized wax according to Claim 1 in printing inks and surface coatings.

**Revendications**

1. Procédé de préparation d'une cire micronisée, caractérisé par le fait que l'on pulvérise une masse cireuse fondue en une fine poudre à particules largement sphériques et que l'on soumet ensuite cette poudre à un broyage, la poudre soumise au broyage présentant une grosseur de grain qui, pour 60 % en poids au moins, est inférieure à 96 μm et, pour 50 % en poids, inférieure à 48 μm.

2. L'utilisation, dans des couleurs d'impression et des laques, des cires micronisées selon la revendication 1.